# EUROPÄISCHE PATENTANMELDUNG

(11) **EP 4 661 288 A1**
(43) Veröffentlichungstag der Anmeldung: **10.12.2025**
(21) Anmeldenummer: 24180842.7
(22) Anmeldetag: 07.06.2024
(51) Int. Cl.: H02S 50/00

(54) **VERFAHREN ZUM ERSTELLEN UND/ODER ÄNDERN EINES ELEKTRISCHEN VERSCHALTUNGSPLANS FÜR DIE ELEKTRISCHE VERSCHALTUNG EINER MEHRZAHL AUF EINER BELEGUNGSFLÄCHE ANGEORDNETER SOLARELEMENTE**

(71) Anmelder: Fraunhofer-Gesellschaft zur Förderung der angewandten Forschung e.V., 80686 München (DE)
(72) Erfinder: Dr. MAURER, Christoph, 79110 Freiburg (DE); Dr. WACKER, Simon, 79110 Freiburg (DE)
(74) Vertreter: LBP Lemcke, Brommer & Partner Patentanwälte mbB

(57) **Zusammenfassung**

Die Erfindung betrifft ein Verfahren zum Erstellen und/oder Ändern eines elektrischen Verschaltungsplans für die elektrische Verschaltung einer Mehrzahl auf einer Belegungsfläche angeordneter Solarelemente (E.1, E.2, E.3). In dem Verfahren erfolgt das Bestimmen einer Eignung eines Solarelements i als ausgewähltes Solarelement (E.1, E.2, E.3) anhand des Qualitätswertes Q(i). Als Qualitätswert Q(i) wird ein monetärer Wert und/oder ein Wert auf Basis einer Lebenszyklusanalyse eines Solarelements (E.1, E.2, E.3) oder einer Untergruppe von Solarelementen (E.1, E.2, E.3) verwendet.

## Beschreibung

Die Erfindung betrifft ein Verfahren zum Erstellen und/oder Ändern eines elektrischen Verschaltungsplans für die elektrische Verschaltung einer Mehrzahl Solarelemente, welche auf einer Belegungsfläche angeordnet sind gemäß Anspruch 1.

Zur Vermeidung des Klimawandels, zur Erfüllung rechtlicher Rahmenbedingungen, aber auch aus persönlicher oder wirtschaftlicher Sicht werden mehr und mehr Solarelemente in Gebäude integriert. Hierbei ergeben sich unterschiedliche Herausforderungen bei Anordnung der Solarelemente auf der Gebäudehülle sowie Verschaltung der Solarelemente untereinander in Bezug auf Effizienz, Wirtschaftlichkeit und Ästhetik. Insbesondere verschattete oder teilverschattete Gebäudehüllen stellen besondere Herausforderungen dar.

Die Verwendung photovoltaischer Solarzellen zur Umwandlung elektromagnetischer Strahlung in elektrische Energie erfolgt üblicherweise mit einem Solarmodul, welches eine Mehrzahl von Solarzellen aufweist. Diese Solarzellen sind zur Bildung eines Solarmoduls typischerweise in Form von Solarzellenstrings verschaltet. Ein solcher Solarzellenstring umfasst mehrere Solarzellen, die elektrisch leitend miteinander verbunden sind. Typischerweise sind die Solarzellen in einem Solarzellenstring in Reihe geschaltet, da eine einzelne Solarzelle eine eher geringere Spannung, jedoch einen hohen Strom erzeugt. Auf der Ebene der Solarmodule erfolgt üblicherweise eine Verschaltung zu größeren Einheiten. Darüber hinaus liegen auch weitere solaraktive Elemente im Rahmen der Erfindung wie bspw. Solarthermieelemente, sodass im Weiteren übergreifend von Solarelementen gesprochen wird.

Aus dem Stand der Technik ist es bekannt, auf der Basis von Erfahrung und anhand von Trial-and-Error-Verfahren zu entscheiden, welche Flächen eines Gebäudes mit Solarelementen belegt werden. Nachteilig an diesen Verfahren ist, dass das Risiko besteht, dass die Belegung von Gebäudehüllen mit Solarelementen geplant wird, die sich aufgrund von technischen Rahmenbedingungen nicht optimal umsetzen lassen oder einen geringeren Ertrag liefern als möglich. Im schlechtesten Fall entscheiden sich Planerlnnen gegen eine Belegung mit Solarelementen, obwohl diese technisch und wirtschaftlich sinnvoll realisierbar wäre.

Der Erfindung liegt daher die Aufgabe zugrunde, die Planung der Verschaltung von Solarelementen auf einer Belegungsfläche und/oder die Änderung eines elektrischen Verschaltungsplans von Solarelementen auf einer Belegungsfläche zu ermöglichen, wobei vorgebbare Auswahlkriterien berücksichtigt werden.

Gelöst ist diese Aufgabe durch ein Verfahren gemäß Anspruch 1. Vorteilhafte Ausgestaltungen des erfindungsgemäßen Verfahrens finden sich in den abhängigen Ansprüchen. Hiermit wird der Wortlaut sämtlicher Ansprüche explizit per Referenz in die Beschreibung einbezogen.

Das erfindungsgemäße Verfahren zum Erstellen und/oder Ändern eines elektrischen Verschaltungsplans für die elektrische Verschaltung einer Mehrzahl auf einer Belegungsfläche angeordneter Solarelemente weist folgende Verfahrensschritte auf:
In einem Verfahrensschritt A erfolgt ein Bereitstellen eines Belegungsplans mit der Position jedes der Mehrzahl von Solarelementen auf der Belegungsfläche.

Anhand des Belegungsplans wird festgelegt, wo auf der Belegungsfläche ein Solarelement mit bestimmten Abmessungen angeordnet ist. Die Belegungsfläche ist vorzugsweise als Flächenmodell, insbesondere in Form einer Gebäudehülle bereitgestellt. Der Belegungsplan legt vorzugsweise die Geometrie der Solarelemente des Belegungsplans fest. Es liegt jedoch selbstverständlich ebenfalls im Rahmen der Erfindung, dass die Solarelemente durch Solarelemente mit leicht abweichender Länge und Breite ausgetauscht werden können.

Vorzugsweise wird der Belegungsplan wie in der parallelen europäischen Patentanmeldung EP24180782.5 der Anmelderin vom 7. Juni 2024 mit dem Titel "Verfahren zum Erstellen eines Belegungsplans für die Anordnung einer Mehrzahl von Solarelementen auf einer Belegungsfläche" beschrieben erstellt. Ein solcher Belegungsplan berücksichtigt die Gegebenheiten der Gebäudehülle, wie Hindernisse auf der Gebäudehülle, Spezialflächen wie Balkonbrüstungen, aber auch erforderliche Mindestabstände, die Solarelemente von Hindernissen oder den Rändern der Belegfläche einhalten müssen.

In einem Verfahrensschritt B erfolgt ein Bereitstellen von Qualitätsdaten, wobei die Qualitätsdaten für jedes Solarelement des Belegungsplans zumindest einen Qualitätswert Q(i) aufweisen.

Der Qualitätswert Q(i) trifft eine grundsätzliche Aussage über die Eignung des Solarelements i aus der Mehrzahl auf der Belegungsfläche angeordneter Solarelemente an der Position des Belegungsplans. Vorzugsweise fließen Informationen aus dem Belegungsplan mit ein, indem eine teilweise Verschattung oder andere positionsbezogene Informationen berücksichtigt werden.

In einem Verfahrensschritt C wird eine Eignung eines Solarelements als ausgewähltes Solarelement anhand des Qualitätswertes Q(i) bestimmt. Die Eignung eines Solarelements wird auf der Ebene eines Solarelements bestimmt und/oder es erfolgt eine Bestimmung der Eignung hinsichtlich der elektrischen Verschaltung der Mehrzahl Solarelemente des Belegungsplans oder einer Untergruppe der Mehrzahl der Solarelemente des Belegungsplans, d. h. es wird vorzugsweise ein Gesamtqualitätswert zusammenwirkender Solarelemente bestimmt. Vorzugsweise wird die Eignung als ausgewähltes Solarelement für jedes Solarelement aus den noch nicht verschalteten Solarelementen des Belegungsplans bestimmt.

Das Bestimmen der Eignung eines Solarelements i erfolgt, indem der Qualitätswert Q(i) des Solarelements i mit einem vorgebbaren Grenzwert G verglichen wird.

Alternativ oder zusätzlich wird ein Gesamtqualitätswert der elektrischen Verschaltung der Mehrzahl Solarelemente oder der Untergruppe einschließlich des Solarelements i bestimmt wird, wobei der Gesamtqualitätswert auf der Basis zumindest eines Qualitätswertes Q(h) eines bereits verschalteten Solarelements und des Qualitätswertes Q(i) des Solarelements i bestimmt wird;

In einem Verfahrensschritt D wird ein elektrischer Verschaltungsplan auf der Basis der ausgewählten Solarelemente erstellt. Das Erstellen eines Verschaltungsplans in Verfahrensschritt D bedeutet im Rahmen dieser Beschreibung, dass entweder ein Verschaltungsplan neu erstellt wird oder dass ein bereits bestehender Verschaltungsplan optimiert wird und auf der Basis des bereits bestehenden Verschaltungsplans ein finaler Verschaltungsplan erstellt wird.

Wesentlich ist, dass der Qualitätswert Q(i) ein monetärer Wert und/oder ein Wert auf der Basis einer Lebenszyklusanalyse zumindest eines Solarelements oder einer Untergruppe von Solarelementen ist.

Dabei liegt es im Rahmen der Erfindung, dass die Untergruppe der Mehrzahl von Solarelementen identisch mit der Gesamtzahl der Mehrzahl Solarelemente des Belegungsplan ist.

Der Begriff Solarelemente umfasst im Rahmen dieser Erfindung, wie oben beschrieben Solarzellen, Solarzellenstrings, Solarmodule sowie weitere solaraktive Elemente sowohl jeweils allein als auch in Kombination als auch in Kombination mit weiteren elektrischen Komponenten wie beispielsweise Dioden, Sicherungen, Leistungsoptimierer, Wechselrichter, Motoren und Speicher.

Die Erfindung ist in der Erkenntnis der Anmelderin begründet, dass die Auswahl der Solarelemente anhand des objektiven und quantifizierbaren Kriteriums in Form eines Qualitätswertes Q(i) die Wahrscheinlichkeit erhöht, dass Gebäudehüllen überhaupt mit Solarelementen belegt werden bzw. dass die Belegung von Gebäudehüllen mit Solarelementen optimiert wird. Mit dem Qualitätswert steht ein individueller und einfach verfügbarer Parameter zur Verfügung, um zu bestimmen, welche Belegung und Verschaltung einer Gebäudehülle mit Solarelementen vorteilhaft ist.

In einer bevorzugten Ausführungsform der Erfindung wird als Qualitätswert Q(i) zumindest einer der folgenden Werte oder eine Kombination verwendet:
- Kapitalwert eines Solarelements oder einer Gruppe von Solarelementen,
- Kosten für Herstellung und/oder Installation eines Solarelements oder einer Gruppe von Solarelementen,
- Gewinn eines Solarelements oder einer Gruppe von Solarelementen,
- Rentabilität eines Solarelements oder einer Gruppe von Solarelementen,
- Amortisationszeit eines Solarelements oder einer Gruppe von Solarelementen,
- Return-on-Investment eines Solarelements oder einer Gruppe von Solarelementen,
- interner Zinsfuß,
- Annuitäten,
- Zeitliche Übereinstimmung von Solarenergieproduktion und Verbrauch am Ort des Gebäudes,
- Zeitliche Übereinstimmung der Solarenergieproduktion eines Solarelements mit der Solarenergieproduktion eines oder mehrerer anderer Solarelemente,
- Energetische Amortisationszeit (Energy Payback Time) eines Solarelements oder einer Gruppe von Solarelementen,
- Erntefaktor eines Solarelements oder einer Gruppe von Solarelementen,
- Einheiten eingesparte nicht-erneuerbare Primärenergie eines Solarelements oder einer Gruppe von Solarelementen,
- Einheiten eingesparte CO₂-Emissionen eines Solarelements oder einer Gruppe von Solarelementen,
- Anteil der wiederverwerteten Materialien eines Solarelements oder einer Gruppe von Solarelementen,
- Parameter gemäß einem Nachhaltigkeitsstandard, vorzugsweise eines Standards der Deutsche Gesellschaft für Nachhaltiges Bauen - DGNB e.V.,
- Werte für Lebenszyklusanalyse-Indikatoren, vorzugsweise gemäß EN 15804,
- Kombinationen der zuvor genannten Werte, vorzugsweise die Kosten pro Einheit eingesparter nicht-erneuerbarer Primärenergie eines Solarelements oder einer Gruppe von Solarelementen.

Diese Werte werden vorzugsweise für jedes Solarelement an der Position in dem zugrundeliegenden Belegungsplan bestimmt, berechnet, geschätzt oder auf der Basis von Daten aus der Vergangenheit prognostiziert. Dabei wird vorzugsweise auf Datenbanken mit bekannten Werten für die unterschiedlichen Solarelemente und/oder auf Informationen der Hersteller und/oder aus der Literatur zurückgegriffen. Alternativ oder zusätzlich können die Qualitätswerte für konkrete Solarelemente und/oder Kombinationen von Solarelemente experimentell und/oder rechnerisch und/oder per Simulation bestimmt werden.

Vorzugsweise sind Randbedingungen vorgesehen, die die Durchführung des Verfahrens einschränken. Mögliche Randbedingungen sind maximale Kosten für Solarelemente, Abmessungen der Solarelemente, Kosten für die Planung, Montagekosten, rechtliche Randbedingungen, wirtschaftliche Randbedingungen, ökologische Randbedingungen, aktueller oder kumulierter Energiebedarf des Gebäudes bzw. der Gebäudeeinheit oder allgemein lokale Rahmenbedingungen. Diese Randbedingungen sind bei der Bestimmung des Qualitätswerts der einzelnen Solarelemente zu berücksichtigen.

In einer bevorzugten Ausführungsform der Erfindung erfolgt in Verfahrensschritt C das Bestimmen der Eignung eines Solarelements als ausgewähltes Solarelement hinsichtlich der elektrischen Verschaltung der Mehrzahl Solarelemente oder einer Untergruppe der Mehrzahl Solarelemente. Dafür wird ein Gesamtqualitätswert GQ der elektrischen Mehrzahl der Solarelemente oder der Untergruppe vor dem Hinzufügen eines Solarelements j verglichen mit einem Gesamtqualitätswert der elektrischen Verschaltung der Mehrzahl Solarelemente oder der Untergruppe nach dem Hinzufügen des Solarelements j. Der Gesamtqualitätswert sowohl vor als auch nach dem Hinzufügen des Solarelements j wird auf der Basis aller Qualitätswerte Q(i) der bereits hinzugefügten Solarelemente bestimmt.

Vorzugsweise wird zunächst das Solarelement i als ausgewähltes Solarelement bestimmt, das für sich alleinstehend den höchsten Qualitätswert Q(i) aller Solarelemente aus der Mehrzahl Solarelemente oder der Untergruppe der Mehrzahl Solarelemente hat. In einem nächsten Schritt wird ein Solarelement j hinzugefügt und der Gesamtqualitätswert Q(i, j) für die elektrischen Verschaltung der beiden elektrischen Solarelemente i, j bestimmt. Dieser Gesamtqualitätswert wird vorzugsweise für jede Kombination aus dem Startsolarelement i und einem weiteren Solarelement j bestimmt, unter der Voraussetzung, dass das zweite Solarelement j innerhalb einer maximalen Distanz dₘₐₓ zu dem Solarelement i liegt. Die verschiedenen Gesamtqualitätswerte Q(i, j) werden verglichen und das Paar mit dem höchsten Gesamtqualitätswert Q(i, j) ausgewählt. Ausgehend von dem hinzugefügten Solarelement j werden die beschriebenen Schritte wiederholt mit dem Ergebnis, dass ein weiteres Solarelement k hinzugefügt wird, das innerhalb der maximalen Distanz dₘₐₓ um das Solarelement j liegt und für die Verschaltung der Solarelemente i, j und k den höchsten Gesamtqualitätswert Q(i, j, k) aufweist. Diese Schritte werden wiederholt, bis alle Solarelemente des Belegungsplans hinzugefügt wurden oder bis der Gesamtqualitätswert der elektrischen Verschaltung der Solarelemente für n Wiederholungen in Folge sinkt. Die Zahl n ist vorgebbar. Für den Fall, dass der Gesamtqualitätswert für n Wiederholungen in Folge sinkt, wird die Anzahl x an Solarelementen ausgewählt und damit die Verschaltung der Solarelemente i, j, k bis x, bei denen der Gesamtqualitätswert am höchsten ist.

Vorzugsweise wird, sofern noch Solarelemente des Belegungsplans nicht verschaltet sind, das Solarelement aus den noch nicht verschalteten Solarelementen ausgewählt, das den höchsten Qualitätswert Q(i) für eine alleinige Installation hat. Dieses Solarelement wird als Startsolarelement für eine erneute Durchführung des Verfahrens ausgewählt. Mit anderen Worten wird ein Maximum des Gesamtqualitätswerts der verschalteten Solarelemente bestimmt, in dem die Schritte wiederholt werden, bis alle theoretisch möglichen Solarelemente verbunden sind. In jedem Schritt wird der Gesamtqualitätswert der bisher miteinander verbundenen, verschalteten Solarelemente bestimmt. Zur Bestimmung des globalen Maximums wird der Schritt mit dem höchsten Gesamtqualitätswert ausgewählt, sodass sich die Verschaltung der Solarelemente, die diesem Gesamtqualitätswert zugrunde liegt, als optimale Verschaltung ergibt.

In einer alternativen Ausführungsform der Erfindung erfolgt in Verfahrensschritt C das Bestimmen der Eignung eines Solarelements j als ausgewähltes Solarelement hinsichtlich einer Untergruppe der Mehrzahl Solarelemente, in dem ein Gesamtqualitätswert der Untergruppe bestimmt wird. Der Gesamtqualitätswert der Untergruppe wird auf der Basis aller Qualitätswerte Q(i) der Mehrzahl Solarelemente i der Untergruppe bestimmt. Vorzugsweise liegt bei der beschriebenen Ausführungsform der Erfindung bereits ein Verschaltungsplan für die Solarelemente des Belegungsplans vor.

Vorzugsweise wird der Verschaltungsplan wie in der parallelen europäischen Patentanmeldung EP24180829.4 der Anmelderin vom 7. Juni 2024 mit dem Titel "Verfahren zum Erstellen eines Verschaltungsplans für die elektrische Verschaltung einer Mehrzahl Solarelemente" beschrieben erstellt. Ein solcher Verschaltungsplan berücksichtigt individuelle Parameter wie Gegebenheiten der Belegfläche, solare Einstrahlung und andere individuell vorgebbare Verschaltungsparameter. Vorzugsweise wird aufgrund der Verwendung des Ähnlichkeitsmaßes bei der Erstellung des Verschaltungsplans berücksichtigt, ob zwei Solarelemente für die Verschaltung untereinander geeignet sind. Dadurch wird der Solarertrag optimiert und es entstehen gleichzeitig möglichst wenige Zusatzkosten, bspw. durch Wechselrichter oder Leistungsoptimierer.

Vorzugsweise weist der Verschaltungsplan eine Mehrzahl verschalteter Strings aus Solarelementen auf. Diese Strings bilden jeweils eine Untergruppe. Für jeden String, d. h. für jede Untergruppe, wird ein Gesamtqualitätswert der Untergruppe auf der Basis von zumindest einem Qualitätswert Q(i) der Solarelemente des Strings und dem Qualitätswert Q(j) des Solarelements j bestimmt. Vorzugsweise wird der Gesamtqualitätswert der Untergruppe auf der Basis von zumindest dem Qualitätswerten Q(i) des Solarelements am Ende des Strings bestimmt, welches mit dem Solarelement j verschaltet werden soll. Insbesondere bevorzugt wird der Gesamtqualitätswert der Untergruppe für jedes Ende des Strings bestimmt. Die beiden Enden des Strings können jeweils mit dem Solarelement i verschaltet werden, sodass auf der Basis der beiden Gesamtqualitätswerte entschieden werden kann, an welchem Ende das Solarelement i vorteilhaft verschaltet werden kann.

Vorzugsweise wird die Untergruppe mit dem höchsten Gesamtqualitätswert in einen finalen Verschaltungsplan übernommen sowie folgend alle weiteren Untergruppen mit jeweils dem nächsthöheren Gesamtqualitätswert in absteigender Reihenfolge. Mit dieser Ausführungsform der Erfindung ist es möglich, einen bereits bestehenden Verschaltungsplan zu bewerten und auf der Basis des Qualitätswerts der einzelnen Solarelemente zu optimieren. Dabei können bspw. unvorteilhafte Untergruppen, z. B. in Form von Strings, gestrichen und aus dem Verschaltungsplan entfernt werden.

In einer bevorzugten Ausführungsform der Erfindung bilden die bereits verschalteten Solarelemente der Mehrzahl Solarelemente oder der Solarelemente der Untergruppe zumindest einen String. Soweit nicht anders angegeben, erfolgt die Betrachtung im Rahmen dieser Beschreibung bezogen auf einen String, da für jeden String das Verfahren üblicherweise bevorzugt separat durchgeführt wird. Der String der bereits verschalteten Solarelemente weist ein Anfangssolarelement und ein Endsolarelement auf. Vorzugsweise wird eine Untergruppe bestimmt, die alle Solarelemente aufweist, die innerhalb einer maximalen Distanz dₘₐₓ von dem Anfangs- oder Endsolarelement des bereits verschalteten Strings liegt. Die Solarelemente, die mit diesem String verschaltet werden, werden aus dieser Untergruppe ausgewählt. Hierdurch ergibt sich der Vorteil, dass Verschaltungen zwischen entfernt liegenden Solarelementen vermieden werden, da diese üblicherweise sehr kostenträchtig sind.

In einer bevorzugten Ausführungsform der Erfindung werden Einstrahlungsdaten für jedes Solarelement des Belegungsplans bereitgestellt. Vorzugsweise wird der Qualitätswert Q(i) für jedes Solarelement des Belegungsplans unter Berücksichtigung der Einstrahlungsdaten bestimmt. Die Einstrahlungsdaten weisen für mehrere Positionen Pᵢ auf der Belegungsfläche jeweils für vorzugsweise drei Zeitpunkte t einen Einstrahlungswert G(i, t) auf. Dieser Einstrahlungswert entspricht der zu diesem Zeitpunkt t an der Position Pᵢ einfallenden Sonnenstrahlung. Dadurch werden die Vor- und Nachteile einer jeden Position auf dem Belegungsplan berücksichtigt, da bspw. verschattete oder teilverschattete Solarzellen weniger Ertrag liefern als nicht verschattete Solarzellen. Der Qualitätswert ist abhängig von den Einstrahlungsdaten. Üblicherweise ist der Qualitätswert je höher, desto höher die Einstrahlung ist.

In einer bevorzugten Ausführungsform der Erfindung wird als Startsolarelement das Solarelement i aus der Mehrzahl der auf der Belegungsfläche abgeordneten Solarelemente ausgewählt, welches den höchsten Qualitätswert Q(i) aufweist. Vorzugsweise wird der Qualitätswert Q(i) als Durchschnittswert für Anfangsinvestition und Betrieb des Solarelements auf der Basis von Daten aus der Vergangenheit oder anhand von Schätzwerten bestimmt. Auf der Basis des Belegungsplans und der Einstrahlungsdaten wird die Berechnung vorzugsweise verfeinert und alle Solarelemente mit einem Qualitätswert oberhalb eines vorgebbaren Grenzwerts G als ausgewählte Solarelemente bestimmt. Solarelemente, deren Qualitätswert nicht oberhalb des Grenzwerts G liegt, werden nicht als ausgewählte Solarelemente ausgewählt und somit in Verfahrensschritt D bei der Erstellung des elektrischen Verschaltungsplans nicht berücksichtigt.

In einer bevorzugten Ausführungsform der Erfindung wird ausgehend von dem Startsolarelement i ein Solarelement j aus den noch nicht verschalteten Solarelementen ausgewählt, welches Solarelement j den höchsten Qualitätswert Q(j) aus den noch nicht verschalteten Solarelementen aufweist oder zu dem höchsten Gesamtqualitätswert der elektrischen Verschaltung der Solarelemente i und j führt. Die zur Verfügung stehenden, noch nicht verschalteten Solarelemente können wie oben beschrieben eingeschränkt werden.

In einer bevorzugten Ausführungsform der Erfindung wird der Verfahrensschritt C wiederholt und die Wiederholung wird abgebrochen, wenn zumindest eine der folgenden Abbruchbedingungen erfüllt ist:
1. Die noch nicht verschalteten Solarelemente liegen nicht innerhalb einer maximalen Distanz dₘₐₓ zu einem Anfangs- oder Endsolarelement eines Strings oder eines weiteren Solarelements in der Mitte des Strings, das noch Verschaltungsmöglichkeiten aufweist. Erst wenn kein Solarelement des Strings, der aktuell gebildet wird, innerhalb der maximalen Distanz noch mit einem nicht verschalteten Solarelement verbunden werden kann, wird das Verfahren abgebrochen und der aktuelle String beendet. Das Verfahren kann dann mit einem neuen String weitergeführt werden, um mögliche noch nicht verschaltete Solarelemente zu verschalten.
2. Der Qualitätswert Q_{individuell}(i) der noch nicht verschalteten Solarelemente ist niedriger als der Grenzwert G_{individuell}. In diesem Fall ist die Verschaltung der noch nicht verschalteten Solarelemente nicht mehr vorteilhaft und das Verfahren wird nicht weitergeführt.
3. Der Qualitätswert Q_{untergruppe}(i) einer Untergruppe der noch nicht verschalteten Solarelemente ist niedriger als der Grenzwert G_{Untergruppe}. In diesem Fall ist das Hinzufügen der Untergruppe einer Mehrzahl Solarelemente nicht mehr vorteilhaft und das Verfahren wird nicht weitergeführt.
4. Der Gesamtqualitätswert der elektrischen Verschaltung der Mehrzahl Solarelemente nach dem Hinzufügen jedes noch nicht verschalteten Solarelements j nimmt ab. In diesem Fall ist die Verschaltung der noch nicht verschalteten Solarelemente ebenfalls nachteilig und das Verfahren wird nicht weitergeführt. In diesen Fällen ist es möglich, aus ästhetischen Gründen Platzhaltersolarelemente ohne energetische Funktion an der Fassade anzubringen, wenn ein bestimmter optischer Eindruck gewünscht ist.
5. Aus den noch nicht verschalteten Solarelemente können keine zusammenhängenden Verschaltungen aus Untergruppen von Solarelementen mehr gebildet werden, die eine Mindestanzahl nₘᵢₙ von Solarelementen aufweisen. In diesem Fall ist eine Verschaltung dieser noch nicht verschalteten Solarelemente zu einem String nicht mehr vorteilhaft. Für solche Solarelemente kann geprüft werden, ob der Einsatz von Leistungsoptimierern oder kleinen Wechselrichtern vorteilhaft ist.
6. Aus den nicht verschalteten Solarelementen können keine zusammenhängenden Verschaltungen aus Untergruppen von Solarelementen mehr gebildet werden, die eine lateral angeordnete Mindestanzahl n_{min, lateral} und eine vertikal angeordnete Mindestanzahl n_{min, vertikal} aufweisen. In diesem Fall kann mit den noch nicht verschalteten Solarelementen nicht mehr das gewünschte ästhetische Ergebnis erreicht werden, sodass eine Verschaltung dieser Elemente nachteilig wäre.
   Es handelt sich um ein ästhetisches Abbruchkriterien. In der Architektur werden oft Rechtecke verwendet. Manuell ist es nicht trivial, aus einer Visualisierung derjährlichen Einstrahlung abzuleiten, an welchen Stellen auf einer Gebäudehülle rechteckige Gruppen aus Solarelementen vorteilhaft platziert werden können und an welchen Stellen nicht. Für verschiedene Formen können Nutzerlnnen laterale und vertikale Mindestanzahlen von Solarelementen vorgeben, sodass bestimmte Geometrien bei der Anordnung erreicht werden. Werden mittels des Verfahrens diese Mindestanzahlen nicht mehr erreicht, wird das Verfahren abgebrochen.
7. Die ausgewählten Solarelemente des Verschaltungsplans decken einen vorgebbaren Strombedarf ab. In diesem Fall ist die Verschaltung zusätzlicher Solarelemente für den Strombedarf des Gebäudes nicht notwendig und daher nachteilig.
   Vorzugsweise werden Speicher bei der Berechnung berücksichtigt. Dabei kann unterschieden werden, ob betrachtet wird, dass zu einem Zeitpunkt mehr Strom produziert als benötigt wird oder dass bereits der ganze Strombedarf des Gebäudes für einen gewissen Zeitraum gedeckt ist.

Die obigen Abbruchkriterien können von Nutzerlnnen einzeln oder kumulativ vorgegeben werden.

In einer bevorzugten Ausführungsform des erfindungsgemäßen Verfahrens wird die Bildung von elliptischen Gruppen aus rechteckigen Solarelementen angestrebt. Dafür wird eine laterale Anzahl von Solarelementen nₗₐₜₑᵣₐₗ und eine vertikale Anzahl von Solarelementen nᵥₑᵣₜᵢₖₐₗ vorgegeben. Weiter wird als Abbruchkriterium eine laterale Mindestanzahl von Solarelementen n_{min, lateral} und eine vertikale Mindestanzahl von Solarelementen n_{min, vertikal} vorgegeben wie zu Punkt 6. oben beschrieben.

In Verfahrensschritt C wird als Startsolarelement das Solarelement mit dem höchsten Qualitätswert Q(i) aus der Mehrzahl von Solarelementen in den Verschaltungsplan platziert. Ausgehend von dem Startsolarelement folgen die nachstehend aufgeführten Verfahrensschritte:
I. Identifizieren der Solarelemente links des Startsolarelements innerhalb der maximalen Distanz nₗₐₜₑᵣₐₗ / 2 als laterale Ergänzungselemente;
II. Platzieren der lateralen Ergänzungselemente in den Verschaltungsplan, falls der Qualitätswert Q_{individuell}(i) der aller lateralen Ergänzungselemente größer als G_{indi-viduell} ist; Ansonsten werden die lateralen Ergänzungselemente ausgehend vom Startelement nacheinander platziert bis das erste laterale Ergänzungselement mit Q_{individuell}(i)≤G_{individuell} erreicht ist. Dieses wird nicht platziert und die weiteren lateralen Ergänzungselemente auch nicht.
III. Identifizieren der Solarelemente oberhalb des Startsolarelements und der lateralen Ergänzungselemente innerhalb der maximalen Distanz nᵥₑᵣₜᵢₖₐₗ als vertikale Ergänzungselemente;
IV. Platzieren der vertikalen Ergänzungselemente in den Verschaltungsplan, falls deren Qualitätswert Q_{individuell}(i) größer als G_{individuell} ist und Q_{untergruppe}(i) größer als G_{Untergruppe} ist; Ansonsten wird ausgehend von den bereits platzierten Solarelementen zunächst eine Zeile vertikaler Ergänzungselemente platziert. Dies wird wiederholt, bis eine Zeile einen Qualitätswert Q_{Untergruppe} (i)≤G_{Untergruppe} hat oder eine Zeile ein Solarelement mit einem Qualitätswert Q_{individuell}(i)≤G_{individuell} beinhaltet. In diesem Fall wird diese Zeile nicht platziert und die weiteren Zeilen auch nicht.
V. Identifizieren der Solarelemente rechts der platzierten Solarelemente innerhalb der maximalen Distanz nₗₐₜₑᵣₐₗ als laterale Ergänzungselemente;
VI. Platzieren der lateralen Ergänzungselemente in den Verschaltungsplan, falls deren Qualitätswert Q_{individuell}(i) größer als G_{individuell} ist und Q_{untergruppe}(i) größer als G_{Untergruppe} ist; Ansonsten werden ausgehend von den bereits platzierten Solarelementen zunächst eine Spalte lateraler Ergänzungselemente platziert. Dies wird wiederholt, bis eine Spalte einen Qualitätswert Q_{Untergruppe} (i)≤G_{Untergruppe} hat oder eine Spalte ein Solarelement mit einem Qualitätswert Q_{individuell}(i)≤G_{individuell} beinhaltet. In diesem Fall wird diese Spalte nicht platziert und die weiteren Spalten auch nicht;
VII. Identifizieren der Solarelemente unterhalb der platzierten Solarelemente innerhalb der maximalen Distanz nᵥₑᵣₜᵢₖₐₗₑ als vertikale Ergänzungselemente;
VIII. Platzieren der vertikale Ergänzungselemente in den Verschaltungsplan, falls deren Qualitätswert Q_{individuell}(i) größer als G_{individuell} ist und Q_{untergruppe}(i) größer als G_{Untergruppe} ist; Ansonsten wird ausgehend von den bereits platzierten Solarelementen zunächst eine Zeile vertikaler Ergänzungselemente platziert. Dies wird wiederholt, bis eine Zeile einen Qualitätswert Q_{Untergruppe} (i)≤G_{Untergruppe} hat oder eine Zeile ein Solarelement mit einem Qualitätswert Q_{individuell}(i)≤G_{individuell} beinhaltet. In diesem Fall wird diese Zeile nicht platziert und die weiteren Zeilen auch nicht;
IX. Identifizieren der Solarelemente links der platzierten Solarelemente innerhalb der maximalen Distanz nₗₐₜₑᵣₐₗ als laterale Ergänzungselemente;
X. Platzieren der lateralen Ergänzungselemente in den Verschaltungsplan, falls deren Qualitätswert Q_{individuell}(i) größer als G_{individuell} ist und Q_{untergruppe}(i) größer als G_{Untergruppe} ist; Ansonsten werden ausgehend von den bereits platzierten Solarelementen zunächst eine Spalte lateraler Ergänzungselemente platziert. Dies wird wiederholt, bis eine Spalte einen Qualitätswert Q_{Untergruppe} (i)≤G_{Untergruppe} hat oder eine Spalte ein Solarelement mit einem Qualitätswert Q_{individuell}(i)≤G_{individuell} beinhaltet. In diesem Fall wird diese Spalte nicht platziert und die weiteren Spalten auch nicht.

Vorzugsweise erfolgt in jedem Verfahrensschritt eine Prüfung, ob die Solarelemente einen Qualitätswert Q(i) oberhalb eines vorgebbaren Grenzwertes G aufweisen. Vorzugsweise werden die Verfahrensschritte III. bis X. so lange wiederholt, bis keine Solarelemente mehr hinzugefügt werden können, die die obigen Bedingungen erfüllen. Vorzugsweise wird das Verfahren ausgehend von einem Startsolarelement aus der Menge der noch nicht verschalteten Solarelemente mit dem nun höchsten Qualitätswert erneut gestartet. Vorzugsweise wird das Verfahren so oft durchgeführt, bis keine Gruppen mehr gebildet werden können, die die vorgebbare laterale Mindestanzahl von Solarelementen und die vorgebbare Mindestanzahl von Solarelementen erfüllen können.

Für den Fall, dass kreisförmige Gruppen aus Solarelementen angestrebt sind, wird vorzugsweise nₗₐₜₑᵣₐₗ = nᵥₑᵣₜᵢₖₐₗ = 1 gesetzt. Auf diese Weise wachsen die Rechtecke aus Solarelemente jeweils um ein Element im Uhrzeigersinn. Hierdurch ergibt sich der Vorteil, dass gewünschte ästhetische Erscheinungsformen erreicht werden können.

Für den Fall, dass vertikale Spalten aus Solarelementen bevorzugt werden sollen, wird vorzugsweise ein großes Verhältnis nᵥₑᵣₜᵢₖₐₗ/nₗₐₜₑᵣₐₗ gewählt. Hierdurch ergibt sich der Vorteil, dass gewünschte ästhetische Erscheinungsformen erreicht werden können.

Für den Fall, dass horizontale Reihen aus Solarelementen bevorzugt werden sollen, wird vorzugsweise ein großes Verhältnis n_{lateral/}nᵥₑᵣₜᵢₖₐₗ gewählt. Hierdurch ergibt sich der Vorteil, dass gewünschte ästhetische Erscheinungsformen erreicht werden können.

In einer bevorzugten Ausführungsform der Erfindung werden Wechselrichter und/oder Leistungsoptimierer für Solarelemente und/oder Strings von Solarelementen vorgesehen. Wechselrichter und Leistungsoptimierer tracken beide den Maximum Power Point des Solarelements bzw. des Strings von Solarelementen, an die sie angeschlossen sind. Während Leistungsoptimierer Gleichstrom ausgeben, wandeln Wechselrichter den Gleichstrom der Solarelemente in Wechselstrom um. In vielen Fällen ist es wirtschaftlicher, einen Wechselrichter für einen oder mehrere Strings von Solarelementen zu verwenden als einen Wechselrichter oder Leistungsoptimierer pro Solarelement. Wenn ein Solarelement eines Strings teilverschattet ist und die anderen Solarelemente des Strings nicht, dann wird das verschattete Solarelement in der Regel über Bypass-Dioden überbrückt und trägt nicht zum Gesamtertrag bei. Deshalb kann es sinnvoll sein, zusätzlich zu Stringwechselrichtern auch Modulwechselrichter bzw. Modulleistungsoptimierer bei Solarelementen einzusetzen, die häufig verschattet sind. Modulwechselrichter und Modulleistungsoptimierer suchen den Maximum Power Point des Moduls, der im Allgemeinen abweicht vom Maximum Power Point des Strings. Auf diese Weise kann ein teilverschattetes Solarelement den bestmöglichen Beitrag zum Gesamtertrag liefern. Eine Zwischenform zwischen Stringwechselrichtern und Modulwechselrichtern bzw. -leistungsoptimierern sind kleine Wechselrichter zum Beispiel für vier Solarelemente. Diese tracken dann den Maximum Power Point des sehr kleinen Strings von vier Solarelementen.

Bei zahlreichen marktverfügbaren Wechselrichtern ist es zudem möglich, dass mehrere Strings mit ihnen verbunden werden. In diesem Fall wird jeder String in dessen Maximum Power Point betrieben, aber es gibt nur einen Wechselstromausgang.

Wenn das Verfahren so oft durchgeführt wurde, dass feststeht, welche Solarelemente nicht mit den entstandenen Strings des Verschaltungsplans verschaltet werden können, besteht die Möglichkeit, diese nicht verschalteten Solarelementen zu verwerfen oder sie unter Einsatz von Leistungsoptimierern mit bestehenden Strings zu verschalten. Vorzugsweise werden in einem nachgelagerten Verfahrensschritt alle nach Durchführung der Verfahrensschritte C und D unverschalteten Solarelemente der Mehrzahl auf der Belegungsfläche angeordneten Solarelemente unter Einsatz von Leistungsoptimierern mit bestehenden Strings des Verschaltungsplans verschaltet. Durch das Verschalten ergibt sich der Vorteil, dass der Solarertrag erhöht wird und keinen unschönen Lücken auf der Belegungsfläche entstehen, die ggf. mit Dummy-Solarelementen gefüllt werden müssten.

Bei der Auswahl der Wechselrichter und/oder Leistungsoptimierer ist es hilfreich, die Betrachtung des Qualitätswerts Q(i) auf diese Bauelemente auszudehnen. In einer bevorzugten Ausführungsform des Verfahrens erfolgt das Bestimmen der Eignung des Solarelements als ausgewähltes Solarelement anhand des Qualitätswerts Q(i) in Verfahrensschritt C für die Kombination aus Solarelement und Wechselrichter bzw. Solarelement und Leistungsoptimierer. Vorzugsweise ist das Solarelement Teil eines Strings aus Solarelementen und die Bestimmung der Eignung des Solarelements als ausgewähltes Solarelement anhand des Qualitätswerts Q(i) in Verfahrensschritt C erfolgt für die Kombination aus dem String mit den bisher verschalteten Solarelementen, dem neu zu verschaltenden Solarelement und dem Wechselrichter und/oder Leistungsoptimierer. Vorzugsweise wird das Verfahren wiederholt ausgeführt, sodass zunächst anhand des Qualitätswerts Q(i) geprüft wird, wo es sinnvoll ist, Stringwechselrichter einzusetzen und anschließend anhand des Qualitätswertes Q(i) geprüft wird, ob diese ausreichend sind, oder ob zusätzlich Modulleistungsoptimierer eingesetzt werden. Hierdurch ergibt sich der Vorteil, dass auch die Solarelemente aus dem Belegungsplan verschaltet werden können, die ohne Leistungsoptimierer und/oder Wechselrichter nicht die erforderlichen Voraussetzungen erfüllen. Durch die Prüfung anhand des Qualitätswertes Q(i) wird jedoch vermieden, dass untaugliche Solarelemente platziert werden.

Der Qualitätswert wird in einer bevorzugten Ausführungsform der Erfindung abhängig von der zeitlichen Übereinstimmung von Solarenergieproduktion und Verbrauch am Ort des Gebäudes bestimmt.

Im Fall von Solarelementen in Form von Photovoltaikelementen wird vorzugsweise zunächst der Strombedarf des Gebäudes in Abhängigkeit der Zeit berechnet. Für alle Positionen einer Belegungsmöglichkeit wird die Stromproduktion in Abhängigkeit der Zeit berechnet. Als Maß der zeitlichen Übereinstimmung von Solarenergieproduktion und Verbrauch wird die Faltung oder die Kreuzkorrelation zwischen dem Strombedarf und der Stromproduktion für alle Positionen der Belegungsmöglichkeit berechnet.

Darauf basierend wird zunächst das Solarelement platziert, welches das größte Maß der zeitlichen Übereinstimmung hat, und danach jeweils das Solarelement mit dem nächstgrößeren Maß der zeitlichen Übereinstimmung. Vorzugsweise werden Speichermöglichkeiten berücksichtigt, indem man den zeitlichen Verlauf der Bereitstellung erneuerbarer Energie durch die Solarelemente umrechnet in den zeitlichen Verlauf der Bereitstellung erneuerbarer Energie aus Solarelementen inklusive Speicher bzw. indem man den zeitlichen Verlauf des Stromverbrauchs am Ort des Gebäudes umrechnet in den zeitlichen Verlauf des Stromverbrauchs am Ort des Gebäudes inklusive Speicher. Hierdurch ergibt sich der Vorteil, dass der finanziell attraktive und sehr effiziente Eigenverbrauch optimiert wird.

Das beschriebene Verfahren kann auch für Solarthermieelemente anstelle von Photovoltaikelementen analog angewendet werden. Auch hier wird vorzugsweise die Möglichkeit von Speichern berücksichtigt.

In einer weiteren bevorzugten Ausführungsform der Erfindung wird der Qualitätswert abhängig von der zeitlichen Übereinstimmung der Solarenergieproduktion eines Solarelements mit der Solarenergieproduktion eines oder mehrerer anderer Solarelemente bestimmt. Bei einer hohen zeitlichen Übereinstimmung der Solarenergieproduktion zweier Solarelemente ist es vorteilhaft, diese Solarelemente zu verschalten. Vorzugsweise wird anhand dieses Kriteriums ein bestehender Verschaltungsplan überprüft, ob es vorteilhaft ist, geplante Strings aus Solarelementen des Verschaltungsplans zu realisieren bzw. bei welchen Strings aus Solarelementen des Verschaltungsplans es vorteilhaft ist, diese zu realisieren.

In einer bevorzugten Ausführungsform des erfindungsgemäßen Verfahrens werden zumindest zwei, vorzugsweise mehrere Verfahren wie oben beschrieben nacheinander oder gleichzeitig ausgeführt. Die Verfahren haben unterschiedlich lange Bearbeitungsdauern. Durch die parallele Ausführung ergibt sich der Vorteil, dass bspw. ein Verfahren mit einer kurzen Bearbeitungsdauer sehr zeitnah einen ersten Vorschlag für einen Verschaltungsplan ergibt, während ein parallel durchgeführtes Verfahren mit einer längeren Bearbeitungsdauer nachträglich optimierte, bspw. ästhetisch oder wirtschaftlich vorteilhaftere Varianten des Verschaltungsplans vorschlagen kann.

In einer bevorzugten Ausführungsform wird das Verfahren als Computerprogramm mit Anweisungen realisiert, die, wenn das Programm von einem Computer ausgeführt wird, den Computer veranlassen, das erfindungsgemäße Verfahren oder eine bevorzugte Ausführungsform des erfindungsgemäßen Verfahrens auszuführen.

Es liegt ebenfalls im Rahmen der Erfindung produktspezifische Charakteristika zu berücksichtigen. Diese können teilweise über geeignete Randbedingungen abgedeckt werden. Auch die Kombination und/oder Zusammenwirkung mit Nutzervorgaben liegt im Rahmen der Erfindung. Nutzerlnnen können eingreifen, indem sie bestimmte Verschaltungen manuell vorgeben und nur der Rest mittels der oben beschriebenen Ausführungsformen oder einer Kombination geplant wird.

Das erfindungsgemäße Verfahren ist insbesondere geeignet für die Verschaltung von Solarmodulen, die keine Wechselrichter, Maximum-Power-Point-Tracker oder Stromwandler beinhalten. Die Erfindung lässt sich aber auch für Solarzellen, Strings aus Solarmodulen oder Solarthermieelemente einsetzen. Die oben beschriebenen Verfahrensschritte und deren Parameter lassen sich verschiedentlich kombinieren. Jede Kombination führt zu einem Verfahren, das sich im Hinblick auf Solarertrag, Kosten und Bearbeitungsdauer unterscheidet. Über eine Ertragssimulation können Verschaltungspläne verglichen werden, um den am besten geeigneten zu finden.

Weitere bevorzugte Merkmale und Ausführungsformen des erfindungsgemäßen Verfahrens werden im Folgenden anhand von Ausführungsbeispielen und den Figuren erläutert.

Dabei zeigt:
- Figur 1: eine beispielhafte Belegungsmöglichkeit einer Fassade;
- Figur 2: ein Ablaufdiagramm für ein Ausführungsbeispiel der Erfindung;
- Figur 3: einen Verschaltungsplan gemäß einem Ausführungsbeispiel der Erfindung;

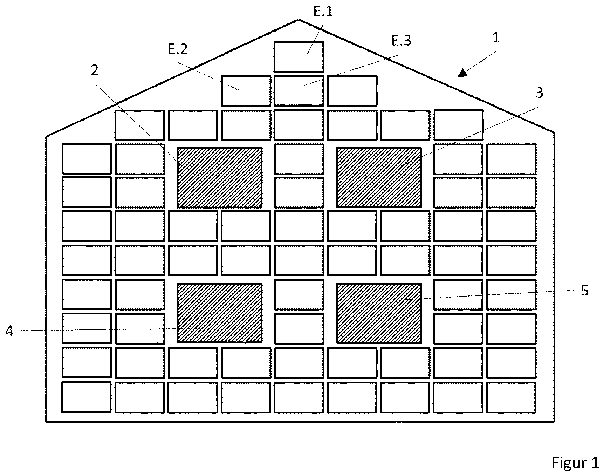

Figur 1 zeigt eine schematische Darstellung einer Belegungsfläche, vorliegend einer Gebäudehülle 1 in Form einer Fassade. Die Fassade weist vorliegend vier Fenster 2, 3, 4, 5, die nicht belegt werden können. Auf der Belegungsfläche 1 sind 67 Solarelemente, beispielhaft gekennzeichnet E.1, E.2, E.3 angeordnet.

Figur 1 zeigt gleichzeitig den Belegungsplan mit der Position jedes der Mehrzahl von Solarelementen auf der Belegungsfläche. Zu dem Belegungsplan liegen Qualitätsdaten vor. Die Qualitätsdaten weisen für jedes Solarelement i des Belegungsplans einen Qualitätswert Q(i) auf.

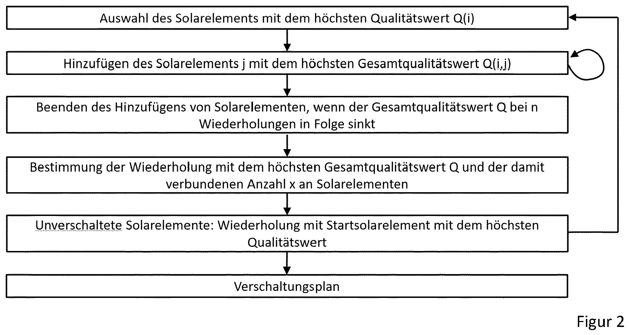

Bei dem vorliegenden Ausführungsbeispiel liegt kein Verschaltungsplan vor. Der Verschaltungsplan wird vielmehr mittels des erfindungsgemäßen Verfahrens erstellt. Ein Ausführungsbeispiel eines erfindungsgemäßen Verfahrens ist als Ablaufdiagramm in Figur 2 dargestellt:
In einem ersten Schritt wird das Solarelement i des Belegungsplans als ausgewähltes Solarelement bestimmt, das für sich alleinstehend den höchsten Qualitätswert Q(i) aller Solarelemente aus der Mehrzahl auf einer Belegungsfläche angeordneter Solarelemente hat. Vorliegend wird das Solarelement als Startsolarelement ausgewählt, das sich einfach installieren lässt und das deshalb den höchsten Qualitätswert Q(i) hat, wenn es allein installiert würde.

Für das nächste hinzuzufügende Solarelement j wird eine Untergruppe aus der Mehrzahl Solarelemente bestimmt, die die Voraussetzung erfüllen, dass das zweite Solarelement j innerhalb einer maximalen Distanz dₘₐₓ zu dem Solarelement i liegt.

In einem nächsten Schritt wird das Solarelement j hinzugefügt und der Gesamtqualitätswert Q(i, j) für die elektrischen Verschaltung der beiden elektrischen Solarelemente i, j bestimmt. Dieser Gesamtqualitätswert wird vorzugsweise für jede Kombination aus dem Startsolarelement i und einem weiteren Solarelement j der Untergruppe bestimmt. Die verschiedenen Gesamtqualitätswerte Q(i, j) werden verglichen und das Paar mit dem höchsten Gesamtqualitätswert Q(i, j) ausgewählt. Es wird also das Solarelement hinzugefügt, das innerhalb der maximalen Distanz dₘₐₓ liegt und den höchsten Gesamtqualitätswerte Q(i, j) als zusätzliche Installation hat.

Ausgehend von dem hinzugefügten Solarelement j werden die beschriebenen Schritte wiederholt: Es wird eine Untergruppe aus der Mehrzahl Solarelemente bestimmt, die die Voraussetzung erfüllen, dass das nächste Solarelement k innerhalb einer maximalen Distanz dₘₐₓ zu dem Solarelement j oder dem Startsolarelement i, d. h. den beiden Enden des aktuellen Strings, liegt. Dann wird ein weiteres Solarelement k hinzugefügt wird, das innerhalb der maximalen Distanz dₘₐₓ um das Solarelement j oder i liegt und für die Verschaltung der Solarelemente i, j und k den höchsten Gesamtqualitätswert Q(i, j, k) aufweist.

Diese Schritte werden wiederholt, bis alle Solarelemente des Belegungsplans hinzugefügt wurden oder bis der Gesamtqualitätswert der elektrischen Verschaltung der Solarelemente für n Wiederholungen in Folge sinkt oder alle Solarelemente verbunden sind. Vorliegend beträgt n = 50.

Für den Fall, dass der Gesamtqualitätswert für n Wiederholungen in Folge sinkt, wird die Anzahl x an Solarelementen ausgewählt und damit die Verschaltung der Solarelemente i, j, k bis x, bei denen der Gesamtqualitätswert am höchsten ist.

Falls nach Durchführung des Verfahrens noch nicht alle Solarelemente des Belegungsplans verschaltet sind, wird das Verfahren ausgehend von einem anderen Startsolarelement aus der Menge der noch nicht verschalteten Solarelemente ausgewählt. Von den noch nicht verschalteten Positionen Belegungsplans wird das Solarelement als Startsolarelement ausgewählt, das den höchsten Qualitätswert aufweist, wenn es allein installiert würde.

Die obigen Schritte werden so lange wiederholt, bis keine Strings mehr entstehen, die die Mindestanzahl nₘᵢₙ von Solarelementen erreichen.

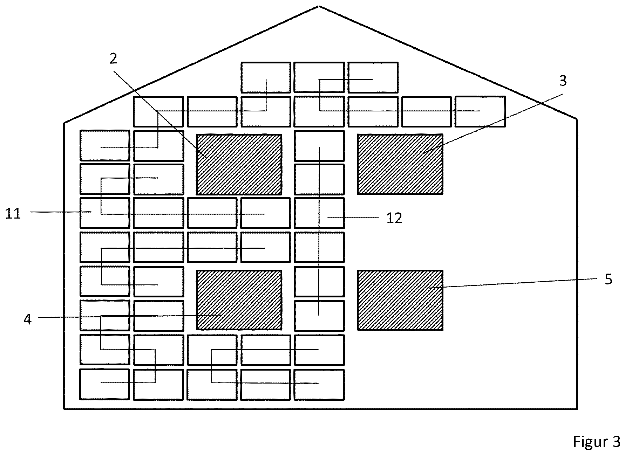

Figur 3 zeigt ein Ausführungsbeispiel der Erfindung, bei dem bereits ein Verschaltungsplan vorliegt. Dieser Verschaltungsplan ist in Figur 3 dargestellt. Mit dem erfindungsgemäßen Verfahren wird der Verschaltungsplan dahingehend optimiert, dass die vorgesehenen Solarelemente im Hinblick auf den Qualitätswert beurteilt und entweder als ausgewählte Solarelemente in dem Verschaltungsplan behalten werden oder, falls sie die erforderlichen Kriterien nicht erfüllen, aus dem Verschaltungsplan gelöscht werden.

Mit anderen Worten wird für den Fall, dass bereits ein Verschaltungsplan vorliegt, für jeden String des Verschaltungsplans der Gesamtqualitätswert berechnet. Vorliegend sind jeweils sechs Solarelemente zu einem String, beispielhaft gekennzeichnet 11 und 12 verbunden. Zunächst wird der String mit dem höchsten Gesamtqualitätswert in den finalen Verschaltungsplan übernommen. Danach werden jeweils die Strings mit den nächsthöheren Gesamtqualitätswerten in absteigender Reihenfolge in den finalen Verschaltungsplan übernommen. Erfüllt der Gesamtqualitätswert eines Strings 11, 12 nicht die vorgebbaren Anforderungen, wird der String gelöscht und nicht in den finalen Verschaltungsplan übernommen. Ist ein vorgebbares Abbruchkriterium erfüllt, wie bspw. dass die ausgewählten Solarelemente des Verschaltungsplans einen vorgebbaren Strombedarf decken, werden ebenfalls keine weiteren Strings in den finalen Verschaltungsplan übernommen.

Enthält der Verschaltungsplan Solarelemente, die nicht verschaltet sind, wird für diese Solarelemente geprüft, ob sich der Gesamtqualitätswert vorteilhaft entwickelt, wenn diese nicht verschalteten Solarelemente mit Leistungsoptimierern oder Wechselrichtern an die bereits bestehenden Strings verschaltet werden.

### Bezugszeichenlisten

- 1: Gebäudehülle
- 2, 3, 4, 5: Fenster
- E.1, E.2, E.3: Solarelemente
- 11, 12: String aus Solarelementen

## Patentansprüche

1. Verfahren zum Erstellen und/oder Ändern eines elektrischen Verschaltungsplans für die elektrische Verschaltung einer Mehrzahl auf einer Belegungsfläche angeordneter Solarelemente (E.1, E.2, E.3),
mit den Verfahrensschritten,
A Bereitstellen eines Belegungsplans mit der Position jedes der Mehrzahl von Solarelementen auf der Belegungsfläche;
B Bereitstellen von Qualitätsdaten, wobei die Qualitätsdaten für jedes Solarelement i des Belegungsplans einen Qualitätswert Q(i) aufweisen;
C Bestimmen einer Eignung eines Solarelements i als ausgewähltes Solarelement (E.1, E.2, E.3) anhand des Qualitätswertes Q(i),
wobei das Bestimmen der Eignung hinsichtlich eines Solarelements (E.1, E.2, E.3) erfolgt, indem der Qualitätswert Q(i) des Solarelements i mit einem vorgebbaren Grenzwert G der Mehrzahl von Solarelementen (E.1, E.2, E.3) verglichen wird
und/oder das Bestimmen der Eignung hinsichtlich der elektrischen Verschaltung der Mehrzahl Solarelemente (E.1, E.2, E.3) oder einer Untergruppe der Mehrzahl Solarelemente (E.1, E.2, E.3) erfolgt, indem ein Gesamtqualitätswert der elektrischen Verschaltung der Mehrzahl Solarelemente oder der Untergruppe einschließlich des Solarelements i bestimmt wird, wobei der Gesamtqualitätswert auf der Basis zumindest eines Qualitätswertes Q(h) eines bereits verschalteten Solarelements und des Qualitätswertes Q(i) des Solarelements i bestimmt wird;
D Erstellen eines elektrischen Verschaltungsplans auf der Basis der ausgewählten Solarelemente (E.1, E.2, E.3);
wobei als Qualitätswert Q(i) ein monetärer Wert und/oder ein Wert auf Basis einer Lebenszyklusanalyse eines Solarelements (E.1, E.2, E.3) oder einer Untergruppe von Solarelementen (E.1, E.2, E.3) verwendet wird.

2. Verfahren nach Anspruch 1,
**dadurch gekennzeichnet,**
**dass** in Verfahrensschritt C das Bestimmen der Eignung eines Solarelements (E.1, E.2, E.3) als ausgewähltes Solarelement hinsichtlich der elektrischen Verschaltung der Mehrzahl Solarelemente oder einer Untergruppe der Mehrzahl Solarelemente zu einem String 11, 12 erfolgt, indem ein Gesamtqualitätswert der elektrischen Verschaltung der Mehrzahl Solarelemente oder der Untergruppe vor dem Hinzufügen eines Solarelementes j zu dem String verglichen wird mit einem Gesamtqualitätswert der elektrischen Verschaltung der Mehrzahl Solarelemente oder der Untergruppe nach dem Hinzufügen des Solarelementes j zu dem String, wobei der Gesamtqualitätswert auf der Basis aller Qualitätswerte Q(i) bereits hinzugefügte Solarelemente bestimmt wird.

3. Verfahren nach einem der vorangegangenen Ansprüche,
**dadurch gekennzeichnet,**
**dass** in Verfahrensschritt C das Bestimmen der Eignung eines Solarelements als ausgewähltes Solarelement hinsichtlich einer Untergruppe der Mehrzahl Solarelemente erfolgt, indem ein Gesamtqualitätswert der Untergruppe bestimmt wird, der auf der Basis der Qualitätswerte Q(i) der Mehrzahl Solarelemente i der Untergruppe bestimmt wird, vorzugsweise dass ein Verschaltungsplan vorliegt, welcher Verschaltungsplan als Untergruppen eine Mehrzahl verschalteter Strings aus Solarelementen aufweist und für jeden String 11, 12 ein Gesamtqualitätswert auf der Basis aller Qualitätswerte Q(i) der Solarelemente des Strings bestimmt wird.

4. Verfahren nach einem der vorangegangenen Ansprüche,
**dadurch gekennzeichnet,**
**dass** als Qualitätswert Q(i) zumindest einer der folgenden Werte verwendet wird:
- Kapitalwert eines Solarelements (E.1, E.2, E.3) oder einer Gruppe von Solarelementen (E.1, E.2, E.3),
- Kosten für Herstellung und/oder Installation eines Solarelements (E.1, E.2, E.3) oder einer Gruppe von Solarelementen (E.1, E.2, E.3),
- Gewinn eines Solarelements (E.1, E.2, E.3) oder einer Gruppe von Solarelementen (E.1, E.2, E.3),
- Rentabilität Solarelements (E.1, E.2, E.3) oder einer Gruppe von Solarelementen (E.1, E.2, E.3),
- Amortisationszeit eines Solarelements (E.1, E.2, E.3) oder einer Gruppe von Solarelementen (E.1, E.2, E.3),
- Return-on-Investment eines Solarelements (E.1, E.2, E.3) oder einer Gruppe von Solarelementen (E.1, E.2, E.3),
- interner Zinsfuß,
- Annuitäten,
- Zeitliche Übereinstimmung von Solarenergieproduktion und Verbrauch am Ort des Gebäudes,
- Zeitliche Übereinstimmung der Solarenergieproduktion eines Solarelements mit der Solarenergieproduktion eines oder mehrerer anderer Solarelemente,
- Energetische Amortisationszeit (Energy Payback Time) eines Solarelements (E.1, E.2, E.3) oder einer Gruppe von Solarelementen (E.1, E.2, E.3),
- Erntefaktor eines Solarelements (E.1, E.2, E.3) oder einer Gruppe von Solarelementen (E.1, E.2, E.3),
- Einheiten eingesparte nicht-erneuerbare Primärenergie eines Solarelements (E.1, E.2, E.3) oder einer Gruppe von Solarelementen (E.1, E.2, E.3),
- Einheiten eingesparte CO₂-Emissionen eines Solarelements (E.1, E.2, E.3) oder einer Gruppe von Solarelementen (E.1, E.2, E.3),
- Anteil der wiederverwerteten Materialien eines Solarelements (E.1, E.2, E.3) oder einer Gruppe von Solarelementen (E.1, E.2, E.3),
- Parameter gemäß einem Nachhaltigkeitsstandard, vorzugsweise eines Standards der Deutsche Gesellschaft für Nachhaltiges Bauen - DGNB e.V.,
- Werte für Lebenszyklusanalyse-Indikatoren, vorzugsweise gemäß EN 15804,
- Kombinationen der zuvor genannten Werte, vorzugsweise in Kombination mit den Kosten pro Einheit eingesparter nicht-erneuerbarer Primärenergie eines Solarelements (E.1, E.2, E.3) oder einer Gruppe von Solarelementen (E.1, E.2, E.3).

5. Verfahren nach einem der vorangegangenen Ansprüche,
**dadurch gekennzeichnet,**
**dass** eine Untergruppe aus der Mehrzahl Solarelemente bestimmt wird, die die Voraussetzung erfüllen, dass das nächste Solarelement k innerhalb einer maximalen Distanz dₘₐₓ zu dem Solarelement j oder dem Solarelement i als den beiden Enden des aktuellen Strings, liegt.

6. Verfahren nach einem der vorangegangenen Ansprüche,
**dadurch gekennzeichnet,**
**dass** Einstrahlungsdaten für jedes Solarelement des Belegungsplans bereitgestellt werden und der Qualitätswert Q(i) für jedes Solarelement des Belegungsplans unter Berücksichtigung der Einstrahlungsdaten bestimmt wird, wobei die Einstrahlungsdaten, vorzugsweise für mehrere Positionen Pᵢ auf der Belegungsfläche, jeweils für zumindest drei Zeitpunkte t einen Einstrahlungswert G(i, t) der zu dem Zeitpunkt t an der Position Pᵢ einfallenden Sonnenstrahlung aufweist.

7. Verfahren nach einem der vorangegangenen Ansprüche,
**dadurch gekennzeichnet,**
**dass** als Startsolarelement das Solarelement i aus der Mehrzahl auf einer Belegungsfläche angeordneter Solarelemente ausgewählt wird, welches den höchsten Qualitätswert Q(i) aufweist.

8. Verfahren nach Anspruch 7,
**dadurch gekennzeichnet,**
**dass** ausgehend von dem Startsolarelement i ein Solarelement j aus den noch nicht verschalteten Solarelementen ausgewählt wird, welches Solarelement j den höchsten Qualitätswert Q(j) aus den noch nicht verschalteten Solarelementen aufweist oder zu dem höchsten Gesamtqualitätswert der elektrischen Verschaltung der Solarelemente i und j führt.

9. Verfahren nach einem der vorangegangenen Ansprüche,
**dadurch gekennzeichnet,**
**dass** der Verfahrensschritt C wiederholt wird, und die Wiederholung abgebrochen wird, wenn zumindest eine der folgenden Abbruchbedingungen erfüllt ist:
- die noch nicht verschalteten Solarelemente liegen nicht innerhalb einer maximalen Distanz dₘₐₓ zu dem Solarelement j oder dem Solarelement i als den beiden Enden des aktuellen Strings;
- der Qualitätswert Q(i) der noch nicht verschalteten Solarelemente ist niedriger als der Grenzwert G;
- der Gesamtqualitätswert der elektrischen Verschaltung der Mehrzahl Solarelemente nach dem Hinzufügen jedes noch nicht verschalteten Solarelementes j nimmt ab;
- es können keine zusammenhängenden Verschaltungen aus Untergruppen von Solarelementen mehr gebildet werden, die eine Mindestanzahl nₘᵢₙ von Solarelementen aufweisen;
- es können keine zusammenhängenden Verschaltungen aus Untergruppen von Solarelementen mehr gebildet werden, die eine Mindestanzahl n_{min, late-ral} und eine Mindestanzahl n_{min, vertikal} aufweisen;
- die ausgewählten Solarelemente des Verschaltungsplans decken einen vorgebbaren Strombedarf.

10. Verfahren nach einem der vorangegangenen Ansprüche,
**dadurch gekennzeichnet,**
**dass** eine laterale Anzahl von Solarelementen nₗₐₜₑᵣₐₗ und eine vertikale Anzahl von Solarelementen nᵥₑᵣₜᵢₖₐₗ vorgebbar ist und in Verfahrensschritt C als Startsolarelement das Solarelement mit dem höchsten Qualitätswert Q (i) aus der Mehrzahl von Solarelementen in den Verschaltungsplan platziert wird und ausgehend von dem Startsolarelement folgende Verfahrensschritte erfolgen:
I Identifizieren der Solarelemente links des Startsolarelements innerhalb der maximalen Distanz nₗₐₜₑᵣₐₗ / 2 als laterale Ergänzungselemente;
II Platzieren der lateralen Ergänzungselemente in den Verschaltungsplan, falls der Qualitätswert Q (i) größer als G ist;
III Identifizieren der Solarelemente oberhalb des Startsolarelements und der lateralen Ergänzungselemente innerhalb der maximalen Distanz n_{Vertikal} als vertikale Ergänzungselemente;
IV Platzieren der vertikalen Ergänzungselemente in den Verschaltungsplan, falls der Qualitätswert Q (i) größer als G ist;
V Identifizieren der Solarelemente rechts der platzierten Solarelemente innerhalb der maximalen Distanz nₗₐₜₑᵣₐₗ als laterale Ergänzungselemente;
VI Platzieren der lateralen Ergänzungselemente in den Verschaltungsplan, falls der Qualitätswert Q (i) größer als G ist;
VII Identifizieren der Solarelemente unterhalb der platzierten Solarelemente innerhalb der maximalen Distanz nᵥₑᵣₜᵢₖₐₗₑ als vertikale Ergänzungselemente;
VIII Platzieren der vertikale Ergänzungselemente in den Verschaltungsplan, falls der Qualitätswert Q (i) größer als G ist;
IX Identifizieren der Solarelemente links der platzierten Solarelemente innerhalb der maximalen Distanz nₗₐₜₑᵣₐₗ als laterale Ergänzungselemente;
X Platzieren der lateralen Ergänzungselemente in den Verschaltungsplan, falls der Qualitätswert Q (i) größer als G ist.

11. Verfahren nach einem der vorangegangenen Ansprüche,
**dadurch gekennzeichnet,**
**dass** Wechselrichter und/oder Leistungsoptimierer für Solarelemente und/oder Strings von Solarelementen vorgesehen werden, vorzugsweise dass in einem nachgelagerten Verfahrensschritt alle nach Durchführung der Verfahrensschritte C und D unverschalteten Solarelemente der Mehrzahl auf der Belegungsfläche angeordneten Solarelemente unter Einsatz von Leistungsoptimierern mit bestehenden Strings des Verschaltungsplans verschaltet werden.

12. Verfahren nach einem der vorangegangenen Ansprüche,
**dadurch gekennzeichnet,**
**dass** zumindest ein Solarelement Wechselrichter und/oder Leistungsumrichter, bevorzugt als Teil eines Strings von Solarelementen, umfasst und das Bestimmen der Eignung des Solarelements als ausgewähltes Solarelement anhand des Qualitätswertes Q(i) in Verfahrensschritt C für die Kombination aus Solarelement und Wechselrichter und/oder Leistungsoptimierer erfolgt, vorzugsweise dass das Solarelement Teil eines Strings aus Solarelementen ist und die Bestimmen der Eignung des Solarelements als ausgewähltes Solarelement anhand des Qualitätswertes Q(i) in Verfahrensschritte C für die Kombination aus dem String des Solarelements und Wechselrichter und/oder Leistungsoptimierer erfolgt.

13. Verfahren nach einem der vorangegangenen Ansprüche,
**dadurch gekennzeichnet,**
**dass** zumindest zwei, vorzugsweise mehrere Verfahren nach einem oder mehreren der vorangegangenen Ansprüche 1 bis 12 nacheinander oder gleichzeitig ausgeführt werden.

14. Computerprogramm mit Anweisungen, die, wenn das Programm von einem Computer ausgeführt wird, den Computer veranlassen, das Verfahren nach einem der Ansprüche 1 bis 13 auszuführen.

15. Computerlesbares Medium mit Befehlen, die, wenn sie von einem Computer ausgeführt werden, den Computer veranlassen, das Verfahren nach einem der Ansprüche 1 bis 13 auszuführen.
